# EUROPÄISCHE PATENTSCHRIFT

(11) **EP 0 875 706 B1**
(45) Veröffentlichungstag und Bekanntmachung des Hinweises auf die Patenterteilung: **23.07.2003**
(21) Anmeldenummer: 98107783.7
(22) Anmeldetag: 29.04.1998
(51) Int. Cl.: F16L 21/00, F16L 25/00

(54) **Anordnung zur Verbindung von Rohren**
Arrangement for connecting pipes
Ensemble pour la connection de tuyaux

(30) Priorität: 01.05.1997 DE 19718282
(43) Veröffentlichungstag der Anmeldung: 04.11.1998
(73) Patentinhaber: Russ, Johann, 79801 Hohentengen (DE)
(72) Erfinder: Russ, Johann, 79801 Hohentengen (DE)
(74) Vertreter: Patentanwälte Ruff, Wilhelm, Beier, Dauster & Partner

(56) Entgegenhaltungen:
- EP-A- 0 385 465
- DE-A- 1 937 176
- DE-C- 4 442 407
- US-A- 1 762 766
- US-A- 4 099 749

## Beschreibung

Die Erfindung betrifft die Verbindung von Rohren miteinander, insbesondere im Abwasserbereich, bei Druckwasserrohren und bei Kabelschutzrohren. Hierbei liegen die Rohre und damit auch die Verbindungsstellen häufig unter der Erde, d. h. an Stellen, wo die Verbindungsstellen später unzugänglich sind.

Bislang ist es üblich, Rohre, insbesondere aus Kunststoff bestehende Rohre, in diesen Anwendungsfällen dadurch miteinander zu verbinden, daß das eine Rohrende um die Wanddicke des Rohres erweitert, d. h. aufgemufft wird, so daß das Rohr in seinem Endbereich auf ein zweites Rohr aufgeschoben werden kann. Diese übliche Art der Verbindung hat den Vorteil, daß ein Längenausgleich aufgrund von Temperaturunterschieden möglich ist. Die Verbindung hat jedoch den Nachteil, daß an der Innenseite der Rohrverbindung ein Ringraum entsteht, der zu einer Verwirbelung, zum Absetzen von Ablagerungen und dergleichen führt. Selbst bei Kabelschutzrohren entsteht ein Nachteil, wenn nämlich ein Kabel nachträglich durchgeschoben oder durchgezogen werden soll. Das freie Ende des Kabels kann sich dann in diesem Ringraum festsetzen. Hinzu kommt noch, daß in dem Ringraum das Stirnende des einen Rohres eine quer zur Längsachse des Rohres verlaufende Fläche bildet.

Es ist bereits eine Muffe zum Verbinden zweier Rohrenden aus DE-C-4 442 407 bekannt, die für jedes Rohrende einen bis zum freien Ende hin doppelwandigen Stutzen aufweist. Der Zwischenraum zwischen den beiden Wänden jedes Stutzens ist mit einem Dichtmittel gefüllt und stirnseitig mit einer luftdichten Abdeckung verschlossen. Beim Einstecken des Rohrendes wird die Abdeckung geöffnet, so dass das Bindemittel nach dem Aushärten eine Verbindung gewährleistet.

Bei weiteren Muffen zur Verbindung von Rohrenden sind die Stutzen im Bereich ihres freien Endes nicht doppelwandig ausgebildet (US-A-1 762 766, US-A-4 099 749, DE 1 937 176).

Der Erfindung liegt die Aufgabe zugrunde, eine Möglichkeit zur Verbindung zweier Rohre miteinander zu schaffen, bei der einerseits ein Temperaturausgleich möglich bleibt und andererseits die Gefahr des Verschmutzens, beispielsweise durch im Abwasser mitgeführte Feststoffe, der Verwirbelung oder des Hängenbleibens von Kabeln verringert bis beseitigt wird. Zur Lösung dieser Aufgabe schlägt die Erfindung eine Anordnung mit den im Anspruch 1 genannten Merkmalen vor. Weiterbildungen der Erfindung sind Gegenstand von Unteransprüchen, deren Wortlaut durch Bezugnahme zum Inhalt der Beschreibung gemacht wird.

Die Muffe nach der Erfindung wird so verwendet, daß die beiden Stirnseiten der miteinander zu verbindenden Rohre in die Ringräume eingeschoben werden. Dadurch entsteht eine Verbindung, bei der nur die glattflächige Innenseite der Muffe an der Verbindungsstelle vorhanden ist. Die Stirnkanten der beiden Rohre sind innerhalb des Ringraums angeordnet. Ein Temperaturausgleich ist nach wie vor möglich. Die inneren Enden der zylindrischen Stutzen könnten abgeschrägt werden, so daß hier nur ganz kleine Vorsprünge noch vorhanden sind.

Erfindungsgemäß kann in Weiterbildung vorgesehen sein, daß die radiale Abmessung des Ringraums konstant ist und der Dicke des jeweiligen Rohrendes entspricht. Damit liegen dann die Rohrenden an sowohl der inneren Wand als auch der äußeren Wand des Ringraums an.

Erfindungsgemäß kann vorgesehen sein, daß bei einer Muffe, die zwei Rohre gleichen Durchmessers miteinander verbindet, die Innenwände der beiden zylindrischen Stutzen ineinander übergehen. Die Muffe ist an der Innenseite also wie ein glatter Zylinder ausgebildet.

Insbesondere kann dabei vorgesehen sein, daß die Ringräume nur durch einen radialen Steg voneinander getrennt sind.

In Weiterbildung der Erfindung kann vorgesehen sein, daß bei der geradlinigen Verbindung zweier Rohre mit gleicher Wandstärke auch die Außenwände der beiden zylindrischen Stutzen glatt ineinander übergehen.

Die von der Erfindung vorgeschlagene Muffe kann zum Verbinden zweier Rohre verwendet werden, die an ihrer Außenseite und an ihrer Innenseite glattflächig sind. Dies sind die bislang üblichen Rohre. Um ein solches Rohr gegenüber der Muffe abzudichten, ist erfindungsgemäß vorgesehen, daß eine der beiden Wände, vorzugsweise die Außenwand des Ringraums, eine in den Ringraum hin offene umlaufende Ringnut zur Aufnahme eines Dichtelements aufweist. Die Ringnut kann beispielsweise dadurch gebildet sein, daß die Muffe in diesem Bereich bei gleichbleibender Wandstärke nach außen verformt ist. Das in der Ringnut festgehaltene Dichtelement liegt dabei auf der glattflächigen Außenseite des Rohrendes auf, so daß die Verbindung auch dicht bleibt, wenn sich das Rohrende aufgrund von Temperaturschwankungen verschiebt.

Die Muffe nach der Erfindung kann auch dazu verwendet werden, sogenannte Leichtgewichtsrohre miteinander oder mit glattflächigen Rohren zu verbinden. Leichtgewichtsrohre oder auch Mehrschichtrohre bestehen aus zwei dicht miteinander verbundenen Rohren, von denen das innere Rohr zylindrisch ist, während das äußere Rohr rippenartige Ringvorsprünge und zwischen diesen Ringnuten aufweist. Solche Leichtgewichtsrohre weisen eine bei gleichem Gewicht größere Ringsteifigkeit oder umgekehrt bei gleicher Steifigkeit ein deutlich niedrigeres Gewicht auf als Vollwandrohre.

Um auch ein Leichtgewichtsrohr gegenüber der Muffe abdichten zu können, kann ein Dichtelement in einem Ringraum zwischen zwei Rippen untergebracht sein, wobei dieser Ringraum eine Art Nut bildet, so daß das Dichtelement gegenüber der glattflächigen Wand der Muffe abdichtet.

Mit Hilfe der von der Erfindung vorgeschlagenen Muffe können Rohre unterschiedlichen Durchmessers, unterschiedlicher Wandstärke geradlinig oder auch unter einem Winkel miteinander verbunden werden.

Erfindungsgemäß kann die Muffe einen dritten oder auch einen nochmals weiteren zylindrischen Stutzen zur Bildung eines Abzweigs zur Verbindung mit einem weiteren Rohr aufweisen. Dieser Stutzen kann genauso aufgebaut sein wie die beiden anderen Stutzen.

Weitere Merkmale, Einzelheiten und Vorzüge der Erfindung ergeben sich aus der folgenden Beschreibung bevorzugter Ausführungsformen der Erfindung sowie anhand der Zeichnung. Hierbei zeigen:
- Fig. 1: einen Längsschnitt durch eine Muffe zur Verbindung eines glattflächigen Rohres mit einem Leichtgewichtsrohr;
- Fig. 2: einen Längsschnitt durch eine Muffe zur Verbindung zweier Rohre unterschiedlichen Durchmessers gemäß einem Ausführungsbeispiel, das nicht im Rahmen der Erfindung liegt;
- Fig. 3: einen Längsschnitt durch eine Muffe mit einer schräg verlaufenden Abzweigung gemäß einem Ausführungsbeispiel, das nicht im Rahmen der Erfindung liegt.

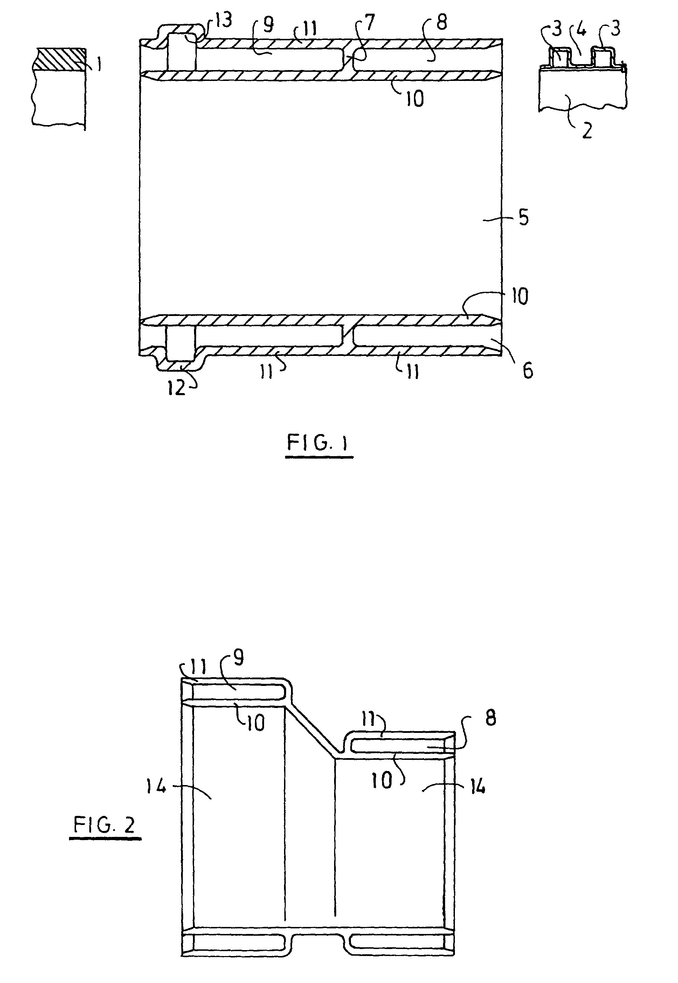

Die in Fig. 1 dargestellte Muffe dient zum Verbinden eines glattflächigen Rohres 1, das links oben in Fig. 1 schematisch angedeutet ist, mit einem Leichtgewichtsrohr 2, das rechts oben in Fig. 1 angedeutet ist. Beide Rohre haben den gleichen Durchmesser und die gleiche Wandstärke, wenn man bei dem Leichtgewichtsrohr als Wandstärke die Differenz zwischen dem Außendurchmesser und dem Innendurchmesser des Rohres verwendet. Das Leichtgewichtsrohr 2 ist tatsächlich aus zwei Schichten aufgebaut, nämlich einem inneren glatten zylindrischen Rohr und einem außen angeordneten gewellten Rohr, das zwischen rippenartigen Vorsprüngen 3 umlaufende Nuten 4 bildet.

Die Muffe enthält eine innere Hülse 5, die vollständig glatt ausgebildet ist. Die Wandstärke der inneren Hülse nimmt an beiden Stirnseiten etwas ab. Koaxial zu der inneren Hülse 5 ist eine äußere Hülse 6 angeordnet, die mit der inneren Hülse durch einen zwischen beiden Hülsen vorhandenen Ringsteg 7 verbunden ist. Zwischen der inneren und der äußeren Hülse entsteht dadurch je ein Ringraum 8, 9, von denen jeder Ringraum zu einer Stirnseite der von den beiden Hülsen gebildeten Muffe hin offen ist. Da beide Hülsen 5, 6 kreiszylindrisch ausgebildet sind, weisen beide Ringräume 8, 9 überall die gleiche radiale Abmessung auf. Die innere Hülse 5 bildet die Innenwand 10 jedes Ringraums 8, 9, während die äußere Hülse 6 die Außenwand 11 der beiden Ringräume 8, 9 bildet. Die Ringräume 8, 9 können aber auch unterschiedlich sein.

Die Außenwand 11 des in Fig. 1 linken Ringraums 9 weist eine nach außen gerichtete Sicke 12 auf, die sich über einen vollständigen Umfang erstreckt und dadurch an der Innenseite der Außenwand 11 eine ringförmige Nut 13 bildet. In dieser Ringnut 13 kann ein Dichtelement eingesetzt werden.

Zum Abdichten des Leichtgewichtsrohres 2 kann in die zwischen den Vorsprüngen 3 gebildete Nut 4 ebenfalls ein Dichtelement eingesetzt werden.

Die beiden Rohre 1, 2 werden durch die Muffe derart miteinander verbunden, daß die beiden Rohre mit ihren Stirnkanten in die Ringräume 8 bzw. 9 eingeschoben werden. Um einen Längenausgleich aufgrund von Temperaturschwankungen zuzulassen, erfolgt das Einschieben nicht so weit, bis die Stirnkanten an dem Quersteg 7 anliegen, jedoch weit genug, damit die Rohre fest in der Muffe gehalten werden. Die Muffe kann so dimensioniert werden, daß die beiden Rohre durch Vorspannung kraftschlüssig in der Muffe gehalten werden. Auch eine Vorspannung mit Schellen ist möglich.

Die in Fig. 1 dargestellte Ausführungsform der Muffe dient zum Verbinden zweier Rohre gleichen Durchmessers und gleicher Wandstärke. Soll mit der Muffe eine Verbindung zwischen zwei glattflächigen Rohren 1 erfolgen, so würde auch der in Fig. 1 rechte Ringraum 8 eine Ringnut 13 für ein Dichtelement aufweisen.

Wird mit einer Muffe, wie sie in Fig. 1 dargestellt ist, eine Verbindung zwischen zwei Rohren gleichen Durchmessers aber unterschiedlicher Wandstärke durchgeführt, so wird die Muffe so ausgebildet, daß die innere Hülse 5 wiederum glattflächig ist, während die Wanddickenunterschiede durch die äußere Hülse 6 ermöglicht werden.

Fig. 2 zeigt eine Muffe, mit der zwei Rohre unterschiedlichen Durchmessers miteinander verbunden werden können. Wiederum enthält die Muffe für jedes Rohrende einen Stutzen 14, der doppelwandig ausgebildet ist, so daß zwischen der jeweiligen Innenwand 10 des Ringraums 8 bzw. 9 und der zugehörigen Außenwand 11 ein Ringraum gebildet ist, der zum Ende der Muffe hin offen ist.

Auch hier ist die Muffe an ihrer Innenseite glattflächig ausgebildet, das heißt, daß hier keine Stirnflächen oder nach außen gerichtete Hinterschneidungen auftreten.

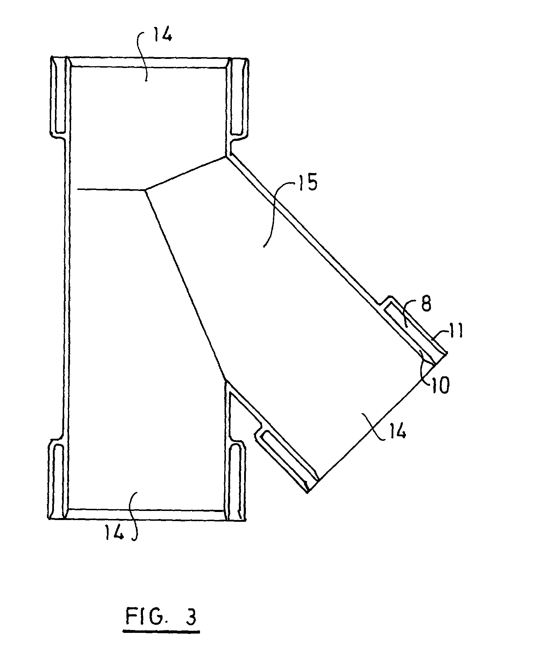

Die Ausführungsform nach Fig. 3 zeigt eine Muffe, mit der zwei Rohre gleichen Durchmessers miteinander verbunden werden können, die in geradliniger Verlängerung angeordnet sind. Hierzu ist ein in Fig. 3 nach oben gerichteter Stutzen 14 und ein nach unten gerichteter Stutzen 14 vorgesehen. Die Muffe enthält zusätzlich eine Abzweigung 15, die ebenfalls als Stutzen 14 ausgebildet ist. An dieser Abzweigung kann ein drittes Rohrende eines zu verbindenden Rohres befestigt werden, wobei auch hier wieder ein Ringraum 8 bzw. 9 zwischen einer Innenwand 10 und einer Außenwand 11 gebildet ist.

## Patentansprüche

1. Anordnung zum Verbinden mindestens zweier Rohre miteinander, insbesondere im Abwasserbereich, im Druckwasserbereich und bei Kabelschutzrohren, wobei eines der zu verbindenden Rohre (1) ein glattflächiges Rohr ist, enthaltend eine Muffe, die
für das Ende jedes zu verbindenden Rohres (1, 2) einen zylindrischen Stutzen (14) aufweist, der
mindestens im Bereich seines freien Endes doppelwandig ausausgebildet ist, wobei
der zwischen der Außenwand (11) und der Innenwand (10) gebildete Ringraum (8, 9) zur Aufnahme des Rohrendes bestimmt ist und
die Muffe eine glattflächige Innenwand aufweist, **dadurch gekennzeichnet, dass** eine der beiden Wände (10, 11), vorzugsweise die Außenwand (11), des Ringraums (9) eine in den Ringraum hin offene Ringnut (13) zur Aufnahme eines Dichtelements für das glattflächige Rohr aufweist.

2. Anordnung nach Anspruch 1, bei der die radiale Abmessung des Ringraums (8, 9) konstant ist und der Dicke des Rohrendes entspricht.

3. Anordnung nach Anspruch 1 oder 2, bei der zur geradlinigen Verbindung zweier Rohre (1, 2) die Innenwände (10) der beiden Stutzen (14) ineinander übergehen.

4. Anordnung nach Anspruch 3, bei der die Ringräume (8, 9) durch einen radialen Steg (7) getrennt sind.

5. Anordnung nach einem der vorhergehenden Ansprüche, bei der zur geradlinigen Verbindung zweier Rohre (1, 2) gleicher Wandstärke die Außenwände (11) der beiden Stutzen (14) ineinander übergehen.

6. Anordnung nach einem der vorhergehenden Ansprüche, bei der mindestens eines der zu verbindenden Rohre ein Leichtgewichtsrohr (2) ist.

7. Anordnung nach Anspruch 6, bei der in einem Ringraum (4) zwischen zwei Rippen (3) des Leichtgewichtsrohres (2) ein Dichtelement angeordnet wird.

8. Anordnung nach einem der vorhergehenden Ansprüche, mit einer Abzweigung (15) zur Verbindung eines dritten Rohres.

## Claims

1. An arrangement for joining at least two pipes, in particular, drain pipes, pressurized water pipes, or cable conduits, with one another, where one of the pipes (1) to be joined is a smooth-surfaced pipe, comprising
a coupling that has
cylindrical fittings (14) for accommodating the ends of pipes (1, 2) to be joined that
are double-walled at least in the vicinities of their free ends, where
the annular spaces (8, 9) formed between their outer walls (11) and inner walls (10) are provided for the purpose of accommodating the ends of pipes to be joined and
the coupling has a smooth-surfaced inner wall, wherein one of the walls (10, 11) of one of the annular spaces (9), preferably its inner wall (11), has an annular groove (13) opening out into the annular space for accommodating a sealing element for sealing the smooth-surfaced pipe.

2. An arrangement according to claim 1, wherein the radial dimensions of the annular spaces (8, 9) are constant and equal the wall thicknesses of the ends of the pipes to be joined.

3. An arrangement according to claim 1 or claim 2, wherein the inner walls (10) of both fittings (14) blend into one another in order to allow generating a straight joint of two pipes (1, 2) to be joined.

4. An arrangement according to claim 3, wherein the annular spaces (8, 9) are separated by a radial baffle (7).

5. An arrangement according to any of the foregoing claims, wherein the outer walls (11) of both fittings (14) blend into one another in order to allow generating a straight joint of two pipes (1, 2) having the same wall thickness.

6. An arrangement according to any of the foregoing claims, wherein at least one of the pipes to be joined is a thin-walled pipe (2).

7. An arrangement according to claim 6, wherein a sealing element is arranged in an annular groove (4) situated between two ribs (3) on the thin-walled pipe.

8. An arrangement according to any of the foregoing claims that has a Y-bend (15) for accommodating a third pipe.

## Revendications

1. Dispositif pour le raccordement d'au moins deux tuyaux entre eux, destiné en particulier aux secteurs des eaux usées, de l'eau sous pression et des gaines de protection des câbles, l'un des tuyaux à relier (1) étant un tuyau de surface lisse, comprenant
un manchon qui
possède un raccord cylindrique (14) pour chaque extrémité des tuyaux (1, 2) à relier, qui
au moins dans la zone de ses extrémités libres, possède une paroi double, et où
l'espace annulaire (8, 9), constitué entre la paroi externe (11) et la paroi interne (10), est destiné à l'introduction de l'extrémité du tuyau, et où
le manchon présente une paroi interne dont la surface est lisse, **caractérisée en ce que** l'une des deux parois (10, 11), de préférence la paroi externe (11) de l'espace annulaire (9), présente à l'entrée de l'espace annulaire une gorge ouverte (13), servant à la réception d'un élément d'étanchéité pour le tuyau de surface lisse.

2. Un dispositif selon la revendication 1, où la dimension radiale de l'espace annulaire (8, 9) est constante et correspond à l'épaisseur de l'extrémité du tuyau.

3. Un dispositif selon les revendications 1 ou 2, où pour le raccord droit de deux tuyaux (1, 2), les parois internes (10) des deux raccords (14) se confondent par emboîtement.

4. Un dispositif selon la revendication 3, où les espaces annulaires (8, 9) sont séparés par une cloison radiale (7).

5. Un dispositif selon l'une des revendications précédentes, où pour le raccord droit de deux tuyaux (1, 2) de même épaisseur de paroi, les parois externes (11) des deux raccords (14) se confondent par emboîtement.

6. Un dispositif selon l'une des revendications précédentes, où au moins un des tuyaux à relier est un tuyau de poids léger (2).

7. Un dispositif selon la revendication 6, où dans un espace annulaire (4), situé entre deux ailettes (3) du tuyau de poids léger (2), on dispose un élément d'étanchéité.

8. Un dispositif selon l'une des revendications précédentes, avec une dérivation (15) pour le raccordement d'un troisième tuyau.
